# EUROPÄISCHE PATENTSCHRIFT

(11) **EP 1 850 994 B1**
(45) Veröffentlichungstag und Bekanntmachung des Hinweises auf die Patenterteilung: **13.06.2012**
(21) Anmeldenummer: 05707382.7
(22) Anmeldetag: 14.02.2005
(51) Int. Cl.: B23F 17/00, B23P 15/14, B23Q 39/04, B23Q 7/04

(54) **VORRICHTUNG UND VERFAHREN ZUR WEICHBEARBEITUNG VON KEGELRÄDERN**
DEVICE AND METHOD FOR GREEN MACHINING BEVEL GEARS
PROCEDE ET DISPOSITIF D'USINAGE AVANT TRAITEMENT DE ROUES CONIQUES

(43) Veröffentlichungstag der Anmeldung: 07.11.2007
(73) Patentinhaber: Klingelnberg GmbH, 42499 Hückeswagen (DE)
(72) Erfinder: MÜLLER, Hartmuth, 42857 Remscheid (DE); THOMAS, Joachim, 85622 Feldkirchen (DE); RIBBECK, Karl Martin, 42897 Remscheid (DE); SCHEIDER, Burkhard, 42499 Hückeswagen (DE); LOH, Dietmar, 51515 Kürten (DE)
(74) Vertreter: OK pat AG
(86) Internationale Anmeldenummer: PCT/EP2005/001478
(87) Internationale Veröffentlichungsnummer: WO 2006/084481

(56) Entgegenhaltungen:
- EP-A- 0 832 716
- DE-A1- 19 904 859
- US-A- 4 597 155
- US-A1- 2003 210 964
- PATENT ABSTRACTS OF JAPAN Bd. 1999, Nr. 05, 31. Mai 1999 (1999-05-31) & JP 11 048078 A (MITSUBISHI HEAVY IND LTD), 23. Februar 1999 (1999-02-23)

## Beschreibung

Die vorliegende Erfindung betrifft Vorrichtungen für die Weichbearbeitung von Kegelrädern, Insbesondere Vorrichtungen, die zum Trockenbearbeiten ausgelegt sind. Die Erfindung betrifft auch ein entsprechendes Verfahren.

Aus der Offenlegungsschrift DE 199 04 859 ist eine Drehmaschine vorbekannt, die zwei Werkstückspindeln aufweist. Die Werkstückspindein haben vertikale Werkstückachsen. Die Werkstückspindeln sind schwenkbar. Eine Werkzeugaufnahme ist unterhalb von jeder Werkstückspindel angeordnet.

Es gibt verschiedenste Maschinen, die bei der Fertigung von Kegelrädern und ähnlichen Zahnrädern zum Einsatz kommen. Seit einiger Zeit besteht der Wunsch, die Fertigung zu automatisieren. Eine Lösung, die sich bisher aber nur bedingt hat durchsetzen können, ist ein Bearbeitungszentrum, das so ausgelegt ist, dass eine ganze Anzahl von Fertigungsschritten auf ein und derselben Maschinen ausgeführt werden können. Solche Maschinen sind nicht nur sehr komplex und daher teuer, sondern erfordern auch einen relativ großen Aufwand beim vorbereitenden Einrichten (Rüstzeit). Auf der anderen Seite sind solche Maschinen, die im Hinblick auf die hohe Flexibilität entwickelt wurden, eher dazu geeignet Einzelanfertigungen oder Kleinstserien zu produzieren.

In dem Europäischen Patent EP 0 832 716 B1 ist eine kompakte Maschine gezeigt und beschrieben, die für das Drehen und Wälzfräsen eines Werkstücks ausgelegt ist, wobei dieses Werkstück nicht umgespannt oder transferiert werden muss. Mit anderen Worten ausgedrückt sitzt das Werkstück nach dem Aufspannen an einer Hauptspindel und wird dort mit verschiedenen Werkzeugen bearbeitet. Es wird als ein Nachteil dieser Maschine angesehen, dass sie aufgrund der Anordnung der verschiedenen Elemente nicht dazu ausgelegt ist eine Trockenbearbeitung auszuführen, da bei der Trockenbearbeitung die Abfuhr der heißen Späne von besonderer Bedeutung ist. Außerdem ist durch die seitliche Anordnung der beiden Schlitten mit den Werkzeugen in Bezug auf das Werkstück der Bewegungsspielraum eingeschränkt. Die gezeigte Maschine eignet sich nicht für das Bearbeiten von Kegelrädern, Tellerädern oder dergleichen, sondern ist für das Bearbeiten von Stirnrädern konzipiert.

Aus der Offenlegungsschrift DE 199 18 289 A1 ist eine weitere Maschine bekannt in der zwei Schritte hintereinander ausgeführt werden ohne das Werkstück umspannen zu müssen. Bei dem ersten auf dieser Maschine ausgeführten Schritt handelt es sich um eine Schruppbearbeitung eines Stirnrades mittels Wälzfräser, um dem Werkstück eine grobe Kontur und Oberfläche zu geben. Dann folgt ein Feinbearbeitungsverfahren, wobei das Werkstück auch hierbei in der selben Aufspannung verbleibt.

Es wird als Nachteil der Maschinen angesehen, die ein Werkstück in mehreren Schritten bearbeiten ohne das Werkstück umzuspannen, dass bei dem Entwurf und der Realisierung der Maschine eine ganze Zahl verschiedenet Parameter berücksichtigt werden müssen. Dabei muss stets ein Kompromiss zwischen den verschiedensten Vorgaben gefunden werden, wie aus folgendem Beispiel ersichtlich ist. Auf der in der eingangs genannten Offenlegungsschrift beschriebenen Maschine wird sowohl das Schruppen als auch das Feinbearbeiten ausgeführt. Beim Schruppen handelt es sich um ein Verfahren, bei dem mit hoher Zerspanungsleistung Material an einem Rohling abgetragen wird. Bei der Feinbearbeitung hingegen wird mit sehr geringern Vorschub und mit großer Präzision gearbeitet. Dies führt alleine bezüglich der Aufspannung zu unterschiedlichen Anforderungen. Aber auch die Art und Anordnung der einzelnen Werkzeuge, sowie deren Ansteuerung kann sehr unterschiedlich sein. Wenn man einen Teil oder alle der genannten Schritte nun auch noch als Trockenbearbeitung vornehmen möchte, so ergeben sich wegen der bei der Trockenbearbeitung speziellen Anforderungen an den Abtransport der heißen Späne weitere Einschränkungen bezüglich der Anordnung der einzelnen Achsen und Werkzeuge.

Der Erfindung liegt die Aufgabe zugrunde, die Fertigung von Kegelrädern einerseits zu vereinfachen und andererseits zu beschleunigen, ohne dabei Qualitätseinbuβen in Kauf nehmen zu müssen.

Eine weitere Aufgabe der Erfindung besteht darin ein Verfahren und eine entsprechende Vorrichtung bereit zu stellen, das/die zur Trockenbearbeitung ausgelegt ist.

Diese Aufgaben werden gemäss der Erfindung durch die Merkmale des Anspruchs 1 und durch die Merkmale des Anspruchs 14 gelöst. Weitere vorteilhafte Ausgestaltungen ergeben sich aus den Unteransprüchen.

Das erfindungsgemässe Verfahren ist speziell für die Bearbeitung von Zahnflanken vor einem Härteprozess, also im weichen Zustand, ausgelegt. Entsprechend sind die Werkzeuge auszuwählen, die zum Einsatz kommen.

### ZEICHNUNGEN

Ausführungsbeispiele der Erfindung werden im Folgenden unter Bezugnahme auf die Zeichnungen näher beschrieben. Es zeigen:
- **FIG. 1**: eine schematische, beispielhafte Darstellung der verschiedenen Bearbeitungsschritte bei der Verzahnung von Kegelrädern;
- **FIG. 2**: eine schematische Darstellung einer ersten Vorrichtung zur Verwendung bei der Weichbearbeitung von Kegelrädern, gemäss Erfindung;
- **FIG. 3**: eine schematische Darstellung einer zweiten Vorrichtung zur Verwendung bei der Weichbearbeitung von Kegelrädern, gemäss Erfindung.

### Detaillierte Beschreibung

Es geht bei der Erfindung um die Bearbeitung von Kegelrädern. Dieser Begriff umfasst definitionsgemäss auch Tellerräder und Kegelritzel. Auch mit umfasst sind Kegelräder ohne Achsversatz und Kegelräder mit Achsversatz, sogenannte Hypoidräder.

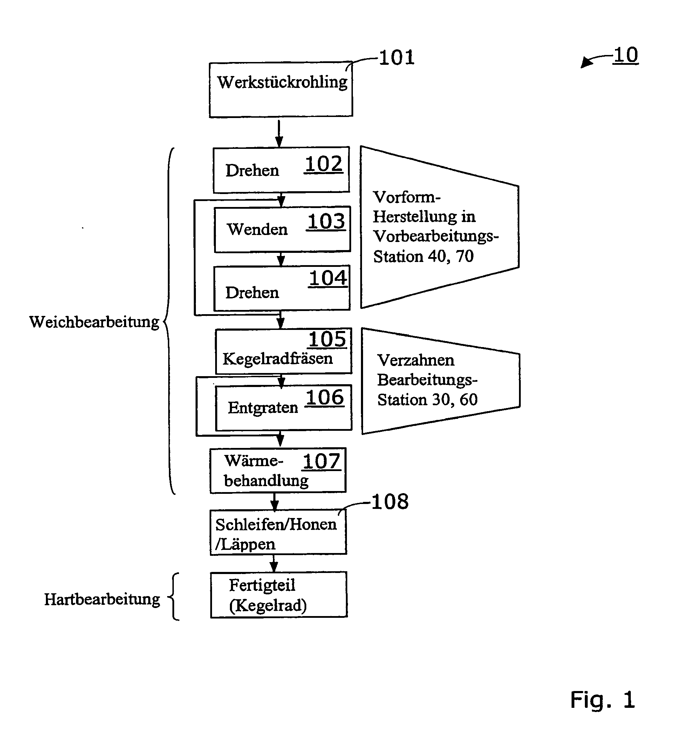

Fig. 1 zeigt eine schematische Darstellung eines beispielhaften Verfahrensablaufs 10. Die Erfindung kann in dem gezeigten Zusammenhang vorteilhaft eingesetzt werden. Es handelt sich, wie erwähnt, um ein Beispiel für die Bearbeitung eines Tellerrades oder Kegelritzels. Ausgehend von einem Werkstückrohling (Box 101) werden in dem gezeigten Beispiel folgende Weichbearbeitungsschritte durchgeführt. Es kann zum Beispiel eine (Zentral-) Bohrung durch Drehen (Box 102) erzeugt werden. Dann kann der Werkstückrohling zur weiteren Bearbeitung gewendet werden (Box 103). Nach dem Wenden kann eine erneute Drehbearbeitung folgen (Box 104). Diese Schritte sind optional und werden im vorliegenden Zusammenhang als Vorform-Herstellung oder als Vorbearbeitung bezeichnet. Im Rahmen der Vorform-Herstellung können auch andere Schritte oder alternative Schritte ausgeführt werden. Am Ende der Vorform-Herstellung wird das Werkstück als Radrohling bezeichnet. Der Schritt 102 oder die Schritte 102 - 104 können gemäss Erfindung in einer sogenannten Vorbearbeitungsstation 40 oder 70 ausgeführt werden.

Nun folgt das sogenannte Verzahnen. Gemäss Erfindung wird vorzugsweise (Trocken-)Kegelradfräsen (Box 105) eingesetzt, um an dem Radrohling Zähne zu erzeugen. Dann folgt der optionale Schritt des Entgratens (Box 106). Der Schritt 105 oder die Schritte 105 - 106 können bei der Erfindung in einer sogenannten Bearbeitungsstation 30 oder 60 ausgeführt werden. Es kann auch eine weitere Bearbeitungsstation eingesetzt werden.

Anschliessend folgt typischerweise eine Wärmebehandlung (Box 107), um den Radrohling zu härten und eine Nach- oder Feinbearbeitung (Box 108). Dann ist das Kegelrad fertiggestellt.

Weitere Details der Erfindung werden im Folgenden anhand einer genaueren Beschreibung der einzelnen Verfahrensschritte und mittels zweier Ausführungsbeispiele beschrieben, wobei Details der einzelnen Ausführungsformen untereinander ausgetauscht oder miteinander kombiniert werden können.

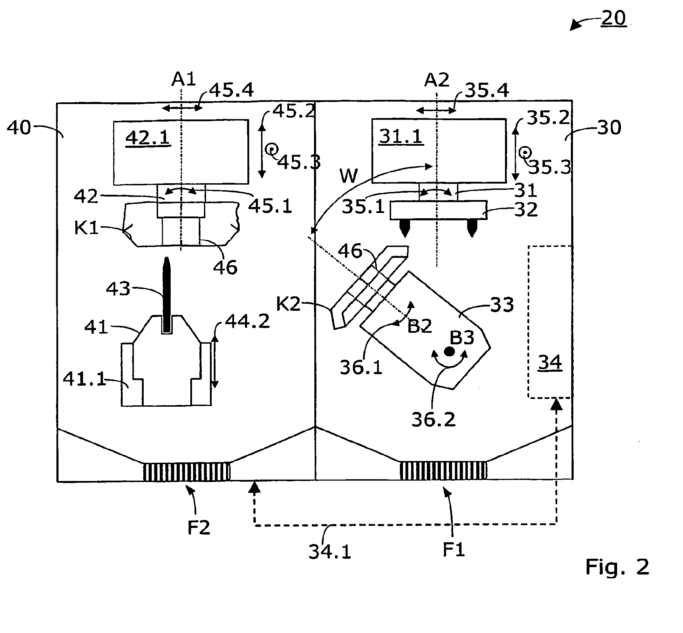

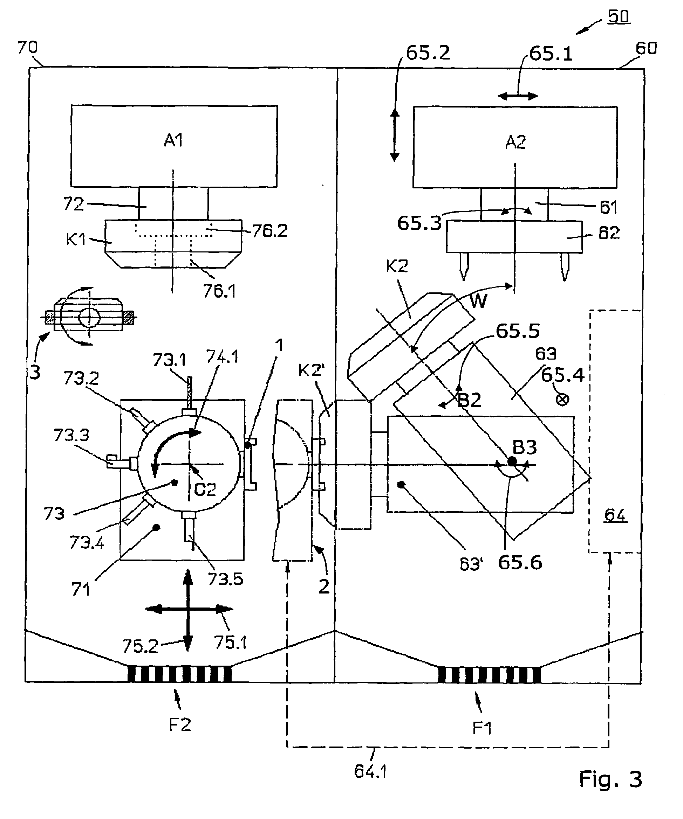

Das erfindungsgemässe Verfahren zum Weichbearbeiten von Kegelrädern umfasst die folgenden Schritte. Die Bezugszeichen beziehen sich auf die Figuren 2 und 3. Ein Werkstückrohling K1 wird an einer ersten Werkstückspindel 42, 72 einer Vorbearbeitungsstation 40, 70 eingespannt. Dann wird eine erste Weichbearbeitung des Werkstückrohlings K1 mit einem oder mehreren Werkzeugen 43, 73.1 - 73.5 durchgeführt. Das Werkzeug 43 oder die Werkzeuge 73.1 - 73.5 sind in einer ersten Werkzeugspindel 41, 71 der Vorbearbeitungsstation 40, 70 eingespannt. Bei dieser ersten Weichbearbeitung handelt es sich um einen oder mehrere der folgenden Bearbeitungsschritte: Bohren, Drehen, Fräsen, usw. Ziel dieser ersten Weichbearbeitung ist es aus dem Werkstückrohling K1 einen Radrohling K2 zu erzeugen.

Dann erfolgt eine automatisierte Übergabe des Radrohlings K2 von der Vorbearbeitungsstation 40, 70 an eine Bearbeitungsstation 30, 60. Dabei wird der Radrohling K2 von der ersten Werkstückspindel 42, 72 an eine zweite Werkstückspindel 33, 63 übergeben, die Teil der Bearbeitungsstation 30, 60 ist. Diese Übergabe kann durch Mittel erfolgen, die in die Bearbeitungsstation 30, 60 und/oder Vorbearbeitungsstation 40, 70 integriert ist, wie im Zusammenhang mit Fig. 3 beschrieben. Es können aber auch externe Mittel für die Übergabe eingesetzt werden, wie im Zusammenhang mit Fig. 2 beschrieben.

In der Bearbeitungsstation 30, 60 wird nun das Verzahnen durchgeführt. Das geschieht wie folgt. Es wird eine zweite Weichbearbeitung des Radrohlings K2 mit einem Werkzeug 32, 62 durchgeführt, das in einer zweiten Werkzeugspindel 31, 61 der Bearbeitungsstation 30, 60 eingespannt ist. Ziel dieser zweiten Weichbearbeitung ist es an dem Radrohling K2 eine Verzahnung zu erzeugen. Vorzugsweise umfasst die zweite Weichbearbeitung das (Trocken-)Fräsen der Kegelradverzahnung des Radrohlings K2 mittels eines Messerkopfes 32, 62.

Um diese Schritte in der genannten Art und Weise ausführen zu können, sind die Bearbeitungsstation 30, 60 und die Vorbearbeitungsstation 40, 70 als vertikal arbeitende Stationen ausgelegt und die Bearbeitungsstation 30, 60 bildet mechanisch zusammen mit der Vorbearbeitungsstation 40, 70 eine Funktionseinheit.

Vorzugsweise können alle Bearbeitungsschritte trocken ausgeführt werden. In diesem Fall muss die Vorrichtung 20, 50 jedoch entsprechend ausgestaltet und ausgelegt sein.

Eine erste Vorrichtung 20 gemäss Erfindung ist in der Fig. 2 gezeigt. Die Vorrichtung 20 ist speziell zur Verwendung bei der Weichbearbeitung von Kegelrädern ausgelegt und umfasst eine CNC-gesteuerte Bearbeitungsstation 30 zum Verzahnen eines Radrohlings K2. Die Bearbeitungsstation 30 weist eine Werkzeugspindel 31 zur Aufnahme eines Verzahnungswerkzeugs 32 (zum Beispiel ein Trockenwälzfräser) und eine Werkstückspindel 33 zur Aufnahme des Radrohlings K2 auf.

Gemäss Erfindung handelt es sich bei der Bearbeitungsstation 30 um eine vertikal arbeitende Bearbeitungsstation, bei welcher beim Verzahnen entweder die Werkstückspindel 33 mit dem Radrohling K2 unterhalb der Werkzeugspindel 31 mit dem Verzahnungswerkzeug 32 angeordnet ist, *oder die* Werkstückspindel 33 mit dem Radrohling K2 oberhalb der Werkzeugspindel 31 mit dem Verzahnungswerkzeug 32 sitzt. Die Vorrichtung 20 umfasst gemäss Erfindung zusätzlich mindestens eine vertikal arbeitende Vorbearbeitungsstation 40 mit einem Werkzeughalter 41 und mit einer Werkstückspindel 42 zur Aufnahme eines Werkstückrohlings K1.

Gemäss Erfindung bildet die Bearbeitungsstation 30 mechanisch zusammen mit der Vorbearbeitungsstation 40 eine Funktionseinheit in welcher der Werkstückrohling K1 in der Vorbearbeitungsstation 40 eine erste Weichbearbeitung erfährt, um dann nach der ersten Weichbearbeitung als Radrohling K2 an die Bearbeitungsstation 30 übergeben und dort verzahnt zu werden. Die Bearbeitungsstation 30 verfügt über eine CNC-Steuerung 34, die in Fig. 2 angedeutet ist. Die Bearbeitungsstation 30 und die Vorbearbeitungsstation 40 sind steuerungstechnisch mit einander verknüpft, was in Fig. 2 durch den Pfeil 34.1 angedeutet ist. Diese Verknüpfung kann über einen Bus oder über eine Kabelverbindung erfolgen. Es ist auch denkbar eine andere Art der Schnittstelle, zum Beispiel eine kabellose Verbindung, einzusetzen, um die CNC-Steuerung 34 mit der Vorbearbeitungsstation 40 zu verknüpfen.

Im Folgenden werden weitere Einzelheiten der in Fig. 2 gezeigten Vorrichtung 20 erläutert. Die Vorbearbeitungsstation 40 weist eine Hauptrotationsachse A1 auf. Die Werkstückspindel 42 kann sich um diese Achse A1 drehen, wie durch den Doppelpfeil 45.1 angedeutet ist. Weiterhin sitzt die Werkstückspindel 42 auf einem Schlitten 42.1 und kann in verschiedenen Richtungen verschoben werden, wie durch die Pfeile 45.2, 45.3 und 45.4 dargestellt. Zusätzlich kann die Werkzeugspindel 41 eine Rotationsachse aufweisen, falls eine Rotation eines Werkzeugs 43 um seine Längsachse erwünscht ist. In der gezeigten Ausführungsform sitzt die Werkzeugspindel 41 auf einem Schlitten 41.1 und kann somit samt Werkzeug 43 parallel zu einer Achse 44.2 verschoben werden. Eine Verschiebbarkeit entlang der Achse 44.2 ist nicht zwingend notwendig, da das Werkzeug 43 auch zum Eingriff gelangen kann in dem die Werkstückspindel 42 parallel zur Achse 45.2 in Richtung des Werkzeugs 43 verschoben wird.

Die Bearbeitungsstation 30 weist eine Hauptrotationsachse A2 auf. Die Werkzeugspindel 31 kann sich um diese Achse A2 drehen, wie durch den Doppelpfeil 35.1 angedeutet ist. Weiterhin sitzt die Werkzeugspindel 31 auf einem Schlitten 31.1 und kann in verschiedenen Richtungen verschoben werden, wie durch die Pfeile 35.2, 35.3 und 35.4 dargestellt. Zusätzlich weist die Werkstückspindel 33 eine Rotationsachse B2 und eine Drehachse B3 auf. Die Werkstückspindel 33 kann um diese Achse B2 gedreht werden, wie durch den Doppelpfeil 36.1 angedeutet ist. Außerdem kann die Werkstückspindel 33 um die Drehachse B3 verdreht werden. Im gezeigten Beispiel wurde die Werkstückspindel 33 samt Radrohling K2 um einen Winkel W gegen den Uhrzeigersinn verdreht.

Bei der in Fig. 2 gezeigten Anordnung der Achsen handelt es sich um eine mögliche Konstellation der Achsen. Die Achsen der beiden Bearbeitungsstationen 30, 40 können auch in anderer Form realisiert sein. Zum Beispiel kann die Werkstückspindel 33 parallel zu der Achse 35.3 bewegbar angeordnet sein. In diesem Fall braucht sich der Schlitten 31.1 nicht in diese Richtung verschieben zu können. Insgesamt sind sowohl für die Vorbearbeitungsstation 40 als auch für die Bearbeitungsstation 30 je 6 Achsen ausreichend.

In der gezeigten Ausführungsform kann die Werkstückspindel 33 samt Radrohling K2 nicht translatorisch verschoben werden. Eine Verschiebbarkeit parallel zu der Achse 35.2 ist nicht zwingend notwendig, da das Werkzeug 32 zugestellt werden kann in dem die Werkzeugspindel 31 parallel zur Achse 35.2 in Richtung des Werkstücks K2 verschiebt. Die Werkstückspindel 33 kann aber auch auf einem Schlitten angeordnet werden, um weitere Freiheitsgrade zu gewinnen.

Bei den verschiedenen Achsen handelt es sich numerisch kontrollierten Achsen. Dadurch können die einzelnen Bewegungen numerisch von der CNC-Steuerung 34 gesteuert werden. Vorzugsweise ist die Steuerung 34 so auslegt, dass alle Achsen numerisch kontrolliert gesteuert sind. Wichtig ist, dass einzelne der Bewegungsabläufe koordiniert erfolgen. Diese Koordinierung wird durch die CNC-Steuerung 34 vorgenommen.

Die erfindungsgemässe Vorrichtung ist insofern speziell und hebt sich dadurch von anderen bekannten Ansätzen ab, als das die einzelnen Bearbeitungsstationen 30, 40 vertikal ausgelegt sind. Außerdem wurde die Lage der verschiedenen numerisch kontrollierten Achsen so gewählt, dass es für die Bearbeitung des Werkstücks K1, K2 einen möglichst großen Bewegungsspielraum gibt. Besonders bevorzugt ist die folgende Anordnung der einzelnen Achsen.

Vorbearbeitungsstation 40: Achse A1 verläuft parallel zur Längsachse des Werkzeugs 43, wobei die beiden Achsen gegeneinander versetzt werden können, indem man eine Relativbewegung parallel zur 45.4 Richtung ausführt. Damit kann man zum Beispiel mit einem Fräser oder Drehmeisel 43 eine Zentralbohrung 46 im Werkstückrohling K1 herausarbeiten. Die Werkzeugspindel 41 samt Schlitten 41.1 ist unterhalb der Werkstückspindel 42 samt Schlitten 42.1 angeordnet und es kann der relative Abstand zueinander verändert werden in dem eine relative Verschiebung parallel zur 45.2 Achse vorgenommen wird. Eine solche Änderung des relativen Abstands kann im gezeigten Beispiel durch eine Verschiebung des Schlittens 42.1 parallel zur 45.2 Achse und/oder durch eine Verschiebung des Schlittens 41.1 parallel zur 44.2 Achse erfolgen. Vorzugsweise kann die beiden Achsen A1 und die Längsachse des Werkzeugs 43 auch in der Tiefe (senkrecht zu der Zeichnungsebene) gegeneinander versetzt werden. Zu diesem Zweck kann der Schlitten 42.1 parallel zur 45.3 Achse verschoben werden.

Bearbeitungsstation 30: Achse A2 verläuft parallel zur Achse B2 (falls W = 0 Grad), es kann aber durch Verdrehen der Werkstückspindel 33 ein Winkel W zwischen den Achsen A2 und B2 eingestellt werden, der vorzugsweise zwischen 0 Grad und ±90 Grad liegt. Die Werkzeugspindel 31 samt Schlitten 31.1 ist bei der gezeigten Ausführungsform oberhalb der Werkstückspindel 33 angeordnet und es kann der relative Abstand zueinander verändert werden in dem eine relative Verschiebung parallel zur 35.2 Achse vorgenommen wird. Eine solche Änderung des relativen Abstands kann im gezeigten Beispiel durch eine Verschiebung des Schlittens 31.1 parallel zur 35.2 Achse erfolgen. Vorzugsweise können die beiden Achsen A2, B2 seitlich (in der Zeichnungsebene) gegeneinander verlagert werden. Zu diesem Zweck kann der Schlitten 31.1 parallel zur 35.4 Achse verschoben werden. Vorzugsweise können die beiden Achsen A2, B2 auch in der Tiefe (senkrecht zu der Zeichnungsebene) gegeneinander bewegt werden. Zu diesem Zweck kann der Schlitten 31.1 parallel zur 35.3 Achse verschoben werden.

Gemäss einer Ausführungsform der Erfindung weist die Werkstückspindel 33 zur Aufnahme des Radrohlings K2 ein Spann- oder Greifmittel auf, um den Radrohling K2 einspannen zu können. Besonders bevorzugt ist eine Ausführungsform bei welcher die Spann- oder Greifmittel zum automatischen Einspannen des Radrohlings K2 ausgelegt sind

Die Vorrichtung 20 kann eine Zufuhreinrichtung umfassen, die das Übergeben des Radrohlings K2 von der Vorbearbeitungsstation 40 an die Bearbeitungsstation 30 bewerkstelligt. Die Zufuhreinrichtung kann zum Beispiel einen Horizontalförderer umfassen, der den Radrohling K2 in der Vorbearbeitungsstation 40 übernimmt und zur Bearbeitungsstation 30 transportiert. Eine solche Zufuhreinrichtung ist vorzugsweise zum vollautomatischen Betrieb ausgelegt, so dass die Werkstückspindel 42 den Radrohling K2, zum Beispiel durch das Öffnen von Spann- oder Greifbacken, freigibt und der Radrohling K2 dann horizontal entlang einer Förderstrecker des Horizontalförderers bewegt wird. Im Bereich der Bearbeitungsstation 30 greifen die Spann- oder Greifmittel der Werkstückspindel 33 den Radrohling K2 auf.

Der Werkzeughalter 41 der Vorbearbeitungsstation 40 ist vorzugsweise mit einem Revolverkopf bestückbar, der mehrere Werkzeuge aufnehmen kann, wie anhand der zweiten Ausführungsform (cf. Fig. 3) beschrieben wird. Besonders bevorzugt ist eine Ausführungsform, bei der mindestens eines der Werkzeuge, die sich am Revolverkopf befinden, individuell angetrieben werden kann.

Die Vorbearbeitungsstation 40 kann zum Drehen, Fräsen, Bohren usw. eingesetzt werden. Die Vorbearbeitungsstation 40 kann auch Mittel zum Wenden des Werkstückrohlings K1 aufweisen.

Eine zweite Ausführungsform der Erfindung ist in Fig. 3 gezeigt. Die Vorrichtung 50 ist speziell zur Verwendung bei der Weichbearbeitung von Kegelrädern ausgelegt und umfasst eine CNC-gesteuerte Bearbeitungsstation 60 zum Verzahnen eines Radrohlings K2. Die Bearbeitungsstation 60 weist eine Werkzeugspindel 61 zur Aufnahme eines Verzahnungswerkzeugs 62 und eine Werkstückspindel 63 zur Aufnahme des Radrohlings K2 auf.

Gemäss Erfindung handelt es sich bei der Bearbeitungsstation 60 um eine vertikal arbeitende Bearbeitungsstation, bei welcher beim Verzahnen die Werkstückspindel 63 mit dem Radrohling K2 unterhalb der Werkzeugspindel 61 mit dem Verzahnungswerkzeug 62 angeordnet ist. Die Werkzeugspindel 61 mit dem Verzahnungswerkzeug 62 kann aber auch unterhalb der Werkstückspindel 63 mit dem Radrohling K2 angeordnet sein. Die Vorrichtung 50 umfasst gemäss Erfindung zusätzlich mindestens eine vertikal arbeitende Vorbearbeitungsstation 70 mit einem Werkzeughalter 71 und mit einer Werkstückspindel 72 zur Aufnahme eines Werkstückrohlings K1.

Gemäss Erfindung bilden die Bearbeitungsstation 60 mechanisch zusammen mit der Vorbearbeitungsstation 70 eine Funktionseinheit in welcher der Werkstückrohling K1 in der Vorbearbeitungsstation 70 eine erste Weichbearbeitung erfährt, um dann nach der ersten Weichbearbeitung als Radrohling K2 an die Bearbeitungsstation 60 übergeben und dort verzahnt zu werden. Die Bearbeitungsstation 60 verfügt über eine CNC-Steuerung 64, die in Fig. 3 angedeutet ist. Die Bearbeitungsstation 60 und die Vorbearbeitungsstation 70 sind steuerungstechnisch mit einander verknüpft, was in Fig. 3 durch den Pfeil 64.1 angedeutet ist. Diese Verknüpfung ist gleich oder ähnlich ausgeführt wie die Verknüpfung, die im Zusammenhang mit Fig. 2 beschrieben wurde.

Im Folgenden werden weitere Einzelheiten der in Fig. 3 gezeigten Vorrichtung 50 erläutert. Die Vorbearbeitungsstation 70 weist eine Hauptrotationsachse A1 auf. Die Werkstückspindel 72 kann sich um diese Achse A1 drehen. Zusätzlich weist auch der Werkzeugträger 73 eine Drehachse C2 auf, die senkrecht zur Zeichnungsebene steht. Der Werkzeugträger 73 kann um diese Achse C2 gedreht werden, wie durch den Doppelpfeil 74.1 angedeutet ist. In der gezeigten Ausführungsform sitzt der Werkzeugträger 73 auf einem Schlitten 71 und kann samt den Werkzeugen 73.1 - 73.5 parallel zu den Achsen 75.1 und 75.2 verschoben werden. Eine getrennte Verschiebbarkeit der Werkstückspindel 72 parallel zu den Achsen 75.1 und 75.2 ist nicht zwingend notwendig, kann aber bei einer alternativen Ausführungsform vorgesehen sein (siehe zum Beispiel Fig. 2).

Im Folgenden sind weitere spezielle Merkmale der Vorrichtung 50 beschrieben. Diese Merkmale können auch im Zusammenhang mit der in Fig. 2 gezeigten Vorrichtung 20 zum Einsatz kommen.

Die Vorrichtung 50 hat eine integrierte Zufuhreinrichtung, die das Übergeben des Radrohlings K2 von der Vorbearbeitungsstation 70 an die Bearbeitungsstation 60 bewerkstelligt. Der Werkzeugträger 73 weist spezielle Spann- oder Greifbacken in einem mit der Zahl 1 bezeichneten Bereich auf. Nachdem der Werkstückrohling K1 in der Vorbearbeitungsstation 70 fertig bearbeitet wurde, wird er an die Bearbeitungsstation 60 übergeben. Der fertig bearbeitete Werkstückrohling K1 wird hier auch als Radrohling K2 bezeichnet, um ihn von dem Werkstückrohling K1 unterscheiden zu können. In einem ersten Schritt wird der Werkzeugträger 73 durch den Schlitten 71 parallel zur Achse 75.2 auf den Radrohling K2 zu bewegt (d.h. es wird der relative Abstand reduziert), der in diesem Moment noch an der Werkstückspindel 72 eingespannt ist. Zum Abnehmen und Übergeben wird der Radrohling K2 von den mit 1 bezeichneten Spann- oder Greifbacken übernommen in dem diese Spann- oder Greifbacken in eine (Zentral-)Bohrung 76.1 des Radrohlings K2 eingreifen. Bevor dies geschieht, werden die Spann- oder Greifbacken aus der "3 Uhr Stellung" (in Fig. 3) in eine "12 Uhr Stellung" gebracht. Sobald die Spann- oder Greifbacken den Radrohling K2 erfasst haben, wird der Radrohling K2 von der Werkstückspindel 72 frei gegeben. Nun dreht sich der Werkzeugträger 73 (vorzugsweise im Uhrzeigersinn) von der "12 Uhr Stellung" in die in Fig. 3 gezeigte "3 Uhr Stellung" und der Schlitten 71 bewegt sich,. soweit wie notwendig, in Richtung der Werkstückspindel 63. In Fig 3 ist diese Stellung des Werkzeugträgers 73 schemenhaft an der mit einer 2 markierten Stelle angedeutet.

Im folgenden Schritt wird die Werkstückspindel 63 in eine "9 Uhr Stellung" gedreht. Bevorzugt die gezeigte Ausführungsform, bei der für die Werkstückspindel 63 keine Verschiebbarkeit parallel zu der Achse 75.1 vorgesehen ist, sondern bei der die Übergabe erfolgt, in dem der Schlitten 71 sich parallel zu Achse 75.1 nach rechts und links verschieben kann.

Die Spann- oder Greifbacken der Werkstückspindel 63 greifen nun von der Rückseite her in eine (Zentral-)Bohrung 76.2 des Radrohlings K2. In dieser Übergabeposition ist der Radrohling mit K2' und die Werkstückspindel mit 63' bezeichnet. Sobald die Spann- oder Greifbacken der Werkstückspindel 63' zu greifen, wird der Radrohling K2' von den Spann- oder Greifbacken 1 der Werkzeugspindel 73 frei gegeben. Nun kann die Werkstückspindel 63 aus der Übergabeposition in eine Bearbeitungsposition (zum Beispiel um den Winkel 90 Grad - W) zurückgedreht werden und die Bearbeitung mit dem Verzahnungswerkzeug 62 kann beginnen.

Optional kann die Vorrichtung 50 Mittel zum Wenden des Werkstückrohlings K1 aufweisen. Diese Mittel sind in Fig. 3 schematisch angedeutet und werden mit dem Bezugszeichen 3 bezeichnet. Um die Gesamtdarstellung in Fig. 3 nicht zu stören wurden die Mittel 3 samt dem eingespannten Werkstückrohling K1 verkleinert dargestellt. Durch einen Doppelpfeil wird angedeutet, dass der Werkstückrohling K1 durch die Mittel 3 gewendet werden kann. Wichtig ist, dass die Mittel 3 so angeordnet und ausgeführt sind, dass sie zusammen (im Wechselspiel mit) der Werkstückspindel 72 das Wenden des Werkstückrohlings K1 ermöglichen.

Die Bearbeitungsstation 60 kann zum Beispiel die folgende Achsenkonstellation mit insgesamt 6 Achsen aufweisen: Drehachse (A2) 65.3, zwei Linearachsen 65.1 und 65. 2 sowie eine Werkstückdrehachse (B2) 65.5, eine Schwenkachse (B3) 65.6 und eine Linearachse 65.4 (senkrecht zur Blattebene). Es liegt auf der Hand, dass auch andere Achskonstellationen mit insgesamt 6 Achsen gibt, die geeignet sind.

Der Werkzeugträger 73 weist in der gezeigten Ausführungsform mehrere Werkzeughalter auf. Im gezeigten Beispiel sind fünf Werkzeughalter mit Werkzeugen 73.1 - 73.5 bestückt. Der Werkzeugträger 73 ist vorzugsweise so ausgeführt, dass mindestens einer der Werkzeughalter mit einem Spindelkopf versehen ist, um das entsprechende Werkzeug individuell antreiben zu können. Bei dem Werkzeug 73.1 kann es sich zum Beispiel um einen Bohrer oder einen Fräskopf handeln, der um seine Längsachse in Rotation versetzt werden kann. Die Werkzeuge 73.2 und 73.4 können zum Beispiel Messerköpfe oder Drehstähle sein, die jeweils fest in einem Werkzeughalter des Werkzeugträgers 73 eingespannt sind. Bei den Werkzeugen 73.3 und 73.5 kann es sich um Entgratköpfe oder dergleichen handeln.

Beide Ausführungsformen können modifiziert und den Rahmenbedingungen entsprechend angepasst werden.

So kann zum Beispiel die Vorrichtung 20 oder 50 auch zum Entgraten eingesetzt werden. Dabei gibt es zwei unterschiedliche Ansätze. Entweder wird das Entgraten nach der Vorbearbeitung ausgeführt, zum Beispiel nach den Schritt 104 in Fig. 1. In diesem Fall geschieht das Entgraten in der Vorbearbeitungsstation 70.

Oder das Entgraten wird nach dem Kegelradfräsen, zum Beispiel nach dem Schritt 106 ausgeführt. Im letzteren Fall wird die Werkstückspindel 63 gegen den Uhrzeigersinn um die Achse B3 gedreht, um eine Bearbeitung des Radrohlings K2 mit einem Entgratwerkzeug am Werkzeugträger 73 zu ermöglichen. In diesem Fall geschieht das Entgraten durch ein Zusammenwirken der Vorbearbeitungsstation 70 und der Bearbeitungsstation 60.

Besonders bevorzugt ist eine Vorrichtung, die sich dadurch auszeichnet, dass die Bearbeitungsstation eine CNC-Steuerung umfasst, die so ausgelegt ist, dass die Bearbeitungsstation entweder autark oder als Funktionseinheit zusammen mit der Vorbearbeitungsstation betreibbar ist. Dies macht es möglich die Bearbeitungsstation alleine zu betreiben und bei Bedarf durch das Hinzufügen der Vorbearbeitungsstation und/oder weiterer Stationen zu erweitern. Der Vorteil der Tatsache, dass es nur einen CNC-Steuerung gibt, die sich in der Bearbeitungsstation befindet, oder die zum Betrieb mit der Bearbeitungsstation ausgelegt ist, wird darin gesehen, dass dadurch die Vorbearbeitungsstation kostengünstiger realisiert werden kann. Diese Kostenersparnis ergibt sich hauptsächlich dadurch, dass die Vorbearbeitungsstation keine eigene CNC-Steuerung braucht. Außerdem ist das Verknüpfen der beiden Stationen sehr viel einfacher und die Koordination der einzelnen Bewegungsabläufe auf der Vorrichtung wird einfacher.

Um Bearbeitungsstation und die Vorbearbeitungsstation gemeinsam betreiben zu können, wie dies die vorliegende Erfindung vorsieht, ist die Vorbearbeitungsstation mittels Anbauverbindungen mechanisch und steuerungstechnisch mit der Bearbeitungsstation verbindbar. Durch die steuerungstechnische Verbindung wird es der CNC-Steuerung der Bearbeitungsstation ermöglicht die Achsen der Vorbearbeitungsstation numerisch zu steuern und die einzelnen Bewegungsabläufe zu koordinieren. Durch die mechanische Verbindung der beiden Stationen wird eine präzise Übergabe von der Vorbearbeitungsstation an die Bearbeitungsstation mittels eines Horizontalförderers, oder durch die in Fig. 3 gezeigte integrierte Zufuhreinrichtung, ermöglicht. Durch die mechanische Verbindung der beiden Stationen können auch die Auffangvorrichtungen F1, F2 für Späne so miteinander kombiniert werden, dass die Späne schnell und problemlos nach hinten abtransportiert werden.

Vorzugsweise umfasst die Vorbearbeitungsstation eigene Antriebe, die alle von der CNC-Steuerung steuerbar sind. So können die Vorbearbeitungsstation und die Bearbeitungsstation zeitgleich eingesetzt werden. Dies ermöglicht eine mindestens teilweise zeitgleiche Weichbearbeitung eines Werkstückrohlings K1 in der Vorbearbeitungsstation und Verzahnung eines Radrohlings K2 in der Bearbeitungsstation.

Besonders bevorzugt ist eine Ausführungsform bei der die Bearbeitungsstation zum Trockenfräsen von Kegelrädern ausgelegt ist.

Für die Bearbeitung der Kegelradverzahnung werden gemäss Erfindung je nach Anwendungsfall Werkzeuge aus Hochleistungsstahl, aus Hartmetall, aus Keramik, oder aus Cermet (Kombination aus Metall und Keramik) mit jeweils einer geeigneten Hartstoffbeschichtung eingesetzt.

Es wird als ein Vorteil der vorliegenden Erfindung angesehen, dass stets mehr als ein Werkstück in der Maschine in Bearbeitung sein kann. Es handelt sich also quasi um eine sehr kompakte Fertigungslinie, die aber durch besondere Maßnahmen, auf kleinstern Raum realisiert und zu erschwinglichen Preisen verfügbar gemacht werden kann.

Eine solche kompakte Fertigungslinie hat eine höheren Durchsatz als zum Beispiel die eingangs genannte Maschine des Standes der Technik (cf. EP 0 832 716 B1).

## Patentansprüche

1. Vorrichtung (20 ; 50) mit einer CNC-gesteuerten Bearbeltungsstation 1. Vorrichtung (20; 50) mit einer CNC-gesteuerten Bearbeitungsstation (30; 60) zum Verzahnen eines Radrohlings (K2), wobei die Bearbeitungsstation (30; 60) eine zweite Werkzeugspindel (31; 61), mit einem Verzahnungswerkzeug (32; 62) und eine zweite Werkstückspindel (33; 53) zur Aufnahme des Radrohlings (K2) aufweist, wobei
- die Bearbeitungsstation (30; 60) eine vertikal arbeitende Bearbeitungsstation (30; 60) ist, bei welcher beim Verzahnen die zweite Werkstückspindel (33; 63) mit somit dem Radrohling (K2) unterhalb oder obernalb der zweiten Werkzeugspindel (31; 61) mit somit dem Verzahnungswerkzeug (32; 62) angeordnet ist,
- die Vorrichtung (20; 50) zusätzlich mindestens eine vertikal arbeitende Vorbearbeitungsstation (40; 70) mit einem ersten Werkzeughalter (41; 71) und einer ersten Werkstückspindel (42; 72) zur Aufnahme eines Werkstückrohlings (K1) aufweist,
**dadurch gekennzeichnet dass**
- die Vorrichtung (20; 50) zur Verwendung bei der Weichbearbeitung von Kegelrädern ausgelegt ist,
- es sich bei dem Verzahnungswerkzeug (32; 62) um einen Messerkopf handelt,
- die Bearbeitungsstation (30; 60) mechanisch zusammen mit der Vorbearbeitungsstation (40; 70) eine Funktionseinheit bildet, in welcher der Werkstückohling (K1) in der Vorbearbeitungsstation (40; 70) eine erste Weichbearbeitung erfährt, während der Werkstückrohling (K1) in der ersten Werkstückspindel (42; 72) aufgenommen ist, um dann nach der ersten Weichbearbeitung als Radrohling (K2) an die zweite Werkstückspindel (33; 63) der Bearbeitungsstation (30; 60) übergeben und dort verzahnt zu werden, und
- die Bearbeitungsstation (30; 60) und die Vorbearbeitungsstation (40; 70) steuerungstechnisch miteinander verknüpft sind.

2. Vorrichtung (20; 50) nach Anspruch 1, **dadurch gekennzeichnet, dass** die Bearbeitungsstation (30; 60) eine CNC-Steuerung (34; 64) umfasst und die Bearbeltungsstation (30; 60) entweder autark oder als Funktionseinheit zusammen mit der Vorbearbeitungsstation (40; 70) betreibbar ist.

3. Vorrichtung (20; 50) nach Anspruch 2, **dadurch gekennzeichnet, dass** die Bearbeitungsstation (30; 60) und die Vorbearbeitungsstation (40; 70) eigene Antriebe umfassen, die alle von der CNC-Steuerung (34; 64) steuerbar sind, um so eine mindestens teilweise zeitgleiche erste Weichbearbeitung eines Werkstückrohlings (K1) und eine Verzahnung eines Radrohlings (K2) ausführen zu können.

4. Vorrichtung (20; 50) nach Anspruch 2 oder 3, **dadurch gekennzeichnet, dass** die Vorbearbeitungsstation (40; 70) mittels Anbauverbindungen so mechanisch und steuerungstechnisch mit der Bearbeitungsstation (30; 60) verbindbar ist, und dass die erste Weichbearbeitung von der CNC-Steuerung (34; 64) der Bearbeitungsstation (30; 60) steuerbar ist.

5. Vorrichtung (20; 50) nach einem der Ansprüche 1 bis 4, **dadurch gekennzeichnet, dass** die Vorrichtung (20; 50) eine Zufuhreinrichtung umfasst, die ein automatisches Übergeben des Radrohlings (K2) von der Vorbearbeitungsstation (40; 70) an die Bearbeitungsstation (30; 60) bewerkstelligt.

6. Vorrichtung (20; 50) nach Anspruch 1, 2 oder 3, **dadurch gekennzeichnet, dass** bei der vertikal arbeitenden Vorbearbeitungsstation (40; 70) der Werkzeughalter (41; 71) unterhalb der Werkstückspindel (42; 72) mit somit dem Werkstückrohling (K1) angeordnet ist.

7. Vorrichtung (20; 50) nach Anspruch 1, 2 oder 3, **dadurch gekennzeichnet, dass** der Werkzeughalter (41; 71) der Vorbearbeitungsstation (40; 70)
- einen Werkzeugträger (41; 73) umfasst, der mit einem Fräswerkzeug (43; 73.1) bestückt ist, oder
- eine Aufnahme für einen Drehstahl (73.2) umfasst und mit einem Drehstahl (73.2) bestückt ist,
um den in der Werkstückspindel (42; 72) der Vorbearbeitungsstation (40; 70) aufgenommenen Werkstückrohling (K1) zu bearbeiten.

8. Vorrichtung (50) nach einem der Ansprüche 1 bis 7, **dadurch gekennzeichnet, dass** der Werkzeughalter der Vorbearbeitungsstation (70) einen Werkzeugträger (73) mit einen Werkzeughalter mit einem drehbaren Spindelkopf umfasst, um das entsprechende Werkzeug (73.1) individuell antreiben zu können.

9. Vorrichtung (20; 50) nach einem der Ansprüche 1 bis 8, **dadurch gekennzeichnet, dass** unterhalb der Bearbeitungsstation (30; 60) und unterhalb der Vorbearbeitungsstation (40; 70) je eine Auffangvorrichtung (F1, F2) für Späne vorgesehen ist, wobei die Späne in jeder der Auffangvorrichtungen (F1, F2) vorzugsweise nach hinten abtransportlert werden.

10. Vorrichtung (20; 50) nach einem der Ansprüche 1 bis 9, **dadurch gekennzeichnet, dass** es sich bei der Bearbeitungsstation (30; 60) um eine Kegelradfräsmaschine handelt, die vorzugsweise speziell zum Trockenfräsen ausgelegt ist.

11. Vorrichtung nach Anspruch 10, **dadurch gekennzeichnet dass** sie eine Nachbearbeitungsstation umfasst, die vorzugsweise zum Entgraten des verzahnten Radrohlings (K2) ausgelegt ist.

12. Vorrichtung (20; 50) nach einem der Ansprüche 1 bis 11, **dadurch gekennzeichnet, dass** der Werkzeughalter (41; 71) der Vorbearbeitungstation ein Entgratwerkzeug zum Entgraten nach dem Drehen oder zum Entgraten nach dem Fräsen, umfasst.

13. Vorrichtung (20; 50) nach einem der Ansprüche 1 bis 11, **dadurch gekennzeichnet, dass** sowohl die Vorbearbeltungsstation (40; 70) als auch die Bearbeitungsstation (30; 60) je sechs Achsen aufweist, die von einer CNC-Steuerung (34; 64) ansteuerbar sind.

14. Verfahren zum Weichbearbeiten von Kegelrädern, mit den folgenden Schritten :
(a) Einspannen eines Werkstückrohlings (K1) an einer ersten Werkstückspindel (42; 72) einer Vorbearbeitungsstation (40; 70),
(b) Durchführen einer ersten Weichbearbeitung des Werkstückrohlings (K1) mit einem Werkzeug (43; 73.1 - 73.5), das in einer ersten Werkzeugspindel (41; 73) der Vorbearbeitungsstation (40; 70) eingespannt ist, um aus dem Werkstückrohling (K1) ein Radrohling (K2) zu erzeugen,
(c) automatisiertes Übergeben des Radrohlings (K2) von der Vorbearbeitungsstation (40; 70) an eine Bearbeitungsstation (30; 60), wobei der Radrohling (K2) von der ersten Werkstückspindel (42; 72) an eine zweite Werkstückspindel (33; 63) der Bearbeitungsstation (30; 60) übergeben wird, und
(d) Durchführen einer zweiten Weichbearbeitung des Radrohlings (K2) mit einem Werkzeug (32; 62), das in einer zweiten Werkzeugspindel (31; 61) der Bearbeitungsstation (30; 60) eingespannt ist, um an dem Radrohling (K2) eine Verzahnung zu erzeugen,
wobei die Bearbeitungsstation (30; 60) und die Vorbearbeitungsstation (40; 70) vertikal arbeitende Stationen sind die steuerungstechnisch miteinander verknüpft sind, wobei die Bearbeitungsstation (30; 60) mechanisch zusammen mit der Vorbearbeitungsstation (40; 70) eine Funktionseinheit bilden und wobei es sich bei dem Werkzeug (32; 62) der zweiten Werkzeugspindel um einen Messerkopf handelt.

15. Verfahren nach Anspruch 14, **dadurch gekennzeichnet, dass** die Bearbeitungsstation (30; 60) und die Vorbearbeitungsstation (40; 70) steuerungstechnisch, vorzugsweise über einen Bus (34.1; 64.1), mit einander verknüpft sind.

16. Verfahren nach Anspruch 14 oder 15, **dadurch gekennzeichnet, dass** während des Durchführens einer ersten Weichbearbeitung des Werkstückrohllngs (K1) zumindest teilweise zeitgleich an einem Radrohling (K2) das Durchführen einer zweiten Weichbearbeitung vorgenommen wird.

17. Verfahren nach Anspruch 14, 15 oder 16, **dadurch gekennzeichnet, dass** bei dem automatisierten Übergeben des Radrohlings (K2) von der Vorbearbeitungsstation (70) an die Bearbeitungsstation (60) eine integrierte Zufuhreinrichtung zum Einsatz kommt und folgende Schritte ausgeführt werden:
- Übernahme des Radrohlings (K2) von Spann- oder Greifmittein (1), die an dem ersten Werkzeugträger (73) vorgesehen sind,
- Drehen des ersten Werkzeugträgers (73) mit somit dem Radrohling (K2) um eine Achse (C2),
- Übergabe des Radrohlings (K2) von den Spann- oder Greifmitteln (1), die an dem ersten Werkzeugträger (73) vorgesehen sind, an Spann- oder Greifmittel, die an der zweiten Werkstückspindel (63) vorgesehen sind, und
- Drehen der zweiten Werkstückspindel (63) mit somit dem Radrohling (K2) um eine Achse, um den Radrohling (K2) In eine Bearbeitungsposition zu bringen bevor der Schritt (d) ausgeführt wird.

18. Verfahren nach einem der Ansprüche 14 bis 17, **dadurch gekennzeichnet, dass** die zweite Weichbearbeitung das Fräsen, vorzugsweise das Trockenfräsen, mit dem Messerkopf (32; 62) umfasst.

19. Verfahren nach Anspruch 17, **dadurch gekennzeichnet, dass** bei dem automatisierten Übergeben des Radrohlings (K2) durch eine CNC Steuerung (34; 64) Bewegungen entlang bzw. um vier Achsen (65.6, 74.1, 75.1 75.2) ausgeführt werden.

## Claims

1. Device (20; 50) comprising a CNC-controlled machining station (30; 60) for gear cutting a wheel blank (K2), wherein the machining station (30; 60) has a second workpiece spindle (31; 61) comprising a gear cutting tool (32; 62) and a second workpiece spindle (33; 63) for the receipt of the wheel blank (K2), wherein:
- the machining station (30; 60) is a machining station (30; 60) functioning vertically, in which the second workpiece spindle (33; 63) with the wheel blank (K2) is arranged below or above the second workpiece spindle (31; 61) with the gear cutting tool (32; 62) during the gear cutting,
- the device (20; 50) further comprises at least one pre-machining station (40; 70) functioning vertically and comprising a first tool holder (41; 71) and a first workpiece spindle (42; 72) for the receipt of a workpiece blank (K1),
**characterized in that**
- the device (20; 50) is designed for a use in the soft machining of bevel gears,
- the gear cutting tool (32; 62) concerns a milling head,
- the machining station (30; 60) mechanically in combination with the pre-machining station (40; 70) form a functional unit, in which the workpiece blank (K1) experiences a first soft machining in the pre-machining station (40; 70) while the workpiece blank (K1) is received in the first workpiece spindle (42; 72), in order to be transferred then after the soft machining as wheel blank (K2) to the second workpiece spindle (33; 63) of the machining station (30; 60) and be gear cut there, and
- the machining station (30; 60) and the pre-machining station (40; 70) are linked with each other in terms of control.

2. Device (20; 50) according to claim 1, **characterized in that** the machining station (30; 60) comprises a CNC control (34; 64) and the machining station (30; 60) can be operated either self-sustained or as a functional unit together with the pre-machining station (40; 70).

3. Device (20; 50) according to claim 2, **characterized in that** the machining station (30; 60) and the pre-machining station (40; 70) comprise proper drive mechanisms, which can all be controlled by the CNC control unit (34; 64), so as to be capable to perform at least partially simultaneously a first soft machining of a workpiece blank (K1) und a gear cutting of a wheel blank (K2).

4. Device (20; 50) according to claim 2 or 3, **characterized in that** the pre-machining station (40; 70) can be connected mechanically and in terms of control with the machining station (30; 60) by means of mounting connections and that the first soft machining is controllable by the CNC control (34; 64) of the machining station (30; 60).

5. Device (20; 50) according to any one of the claims 1 to 4, **characterized in that** the device (20; 50) comprises a feeding system which accomplishes a delivery in an automated way of the wheel blank (K2) from the pre-machining station (40; 70) to the machining station (30; 60).

6. Device (20; 50) according to claim 1, 2 or 3, **characterized in that** in the pre-machining station (40; 70) functioning vertically, the tool holder (41; 71) is arranged below the workpiece spindle (42; 72) with the workpiece blank (K1).

7. Device (20; 50) according to claim 1, 2 or 3, **characterized in that** the tool holder (41; 71) of the pre-machining station (40; 70) comprises
- a tool carrier (41; 73) which is fitted with a milling tool (43; 73.1) or
- a holding fixture for a turning steel (73.2) and is fitted with a turning steel (73.2),
so as to machine the workpiece blank (K1) received in the workpiece spindle (42; 72) of the pre-machining station (40; 70).

8. Device (50) according to any one of the claims 1 to 7, **characterized in that** the tool holder of the pre-machining station (40; 70) comprises a tool carrier (73) comprising a tool holder comprising a rotatable spindle head so as to be capable to individually drive the respective tool (73.1).

9. Device (20; 50) according to any one of the claims 1 to 8, **characterized in that** a respective collecting device (F1, F2) for chips is provided below the machining station (30; 60) and below the pre-machining station (40; 70), wherein the chips are preferably conveyed reardwardly in each of the catching devices (F1, F2).

10. Device (20; 50) according to any one of the claims 1 to 9, **characterized in that** the machining station (30; 60) concerns a bevel gear milling machine which is preferably designed particularly for dry milling.

11. Device according to claim 10, **characterized in that** it comprises a machine finishing station which is preferably designed for deburring the toothed unmachined gear part (K2).

12. Device (20; 50) according to any one of the claims 1 to 11, **characterized in that** the tool holder (41; 71) of the pre-machining station (40; 70) comprises a deburring tool for deburring after the turning or for deburring after the milling.

13. Device (20; 50) according to any one of the claims 1 to 11, **characterized in that** the pre-machining station (40; 70) as well as the machining station (30; 60) respectively have six axes which are controllable by a CNC control (34; 64).

14. Method for soft machining of bevel gears, comprising the following steps:
(a) clamping a workpiece blank (K1) at a first workpiece spindle (42; 72) of a pre-machining station (40; 70),
(b) performing a first soft machining of the workpiece blank (K1) with a tool (43; 73.1 - 73.5) that is clamped in a first tool spindle (41; 73) of the pre-machining station (40; 70) so as to fabricate a wheel blank (K2) from the workpiece blank (K1),
(c) transferring in an automated way of the wheel blank (K2) from the pre-machining station (40; 70) to a machining station (30; 60), wherein the wheel blank (K2) is transferred from the first workpiece spindle (42; 72) to a second workpiece spindle (33; 63) of the machining station (30; 60), and
(d) performing a second soft machining of the wheel blank (K2) with a tool (32; 62) that is clamped in a second tool spindle (31; 61) of the machining station (30; 60), so as to fabricate a gearing on the wheel blank (K2), wherein the machining station (30; 60) and the pre-machining station (40; 70) are stations which function vertically and are linked to each other in terms of control, wherein the machining station (30; 60) mechanically in combination with the pre-machining station (40; 70) form a functional unit and wherein the tool (32; 62) of the second tool spindle concerns a milling head.

15. Method according to claim 14, **characterized in that** the machining station (30; 60) and the pre-machining station (40; 70) are linked to each other in terms of control, preferably via a bus (34.1; 64.1).

16. Method according to claim 14 or 15, **characterized in that** during the performing of the first soft machining of the workpiece blank (K1), there is carried out at least partially simultaneously the performing of a second soft machining of a wheel blank (K2).

17. Method according to claim 14, 15 or 16, **characterized in that** during the transferring in an automated way of the wheel blank (K2) from the pre-machining station (70) to the machining station (60) an integrated feeding system comes into operation and the following steps are carried out:
- taking over of the wheel blank (K2) by clamping or gripping means (1) which are provided at the first tool carrier (73),
- turning of the first tool carrier (73) including the wheel blank (K2) around an axis (C2),
- transferring the wheel blank (K2) from the clamping or gripping means (1) which are provided at the first tool carrier (73) to clamping or gripping means which are provided at the second workpiece spindle (63), and
- turning the second workpiece spindle (63) including the wheel blank (K2) around an axis, so as to bring the wheel blank (K2) in a position for machining before the step (d) is carried out.

18. Method according to any one of the claims 14 to 17, **characterized in that** the second soft machining comprises the milling, preferably the dry milling, using the milling head (32; 62).

19. Method according to claim 17, **characterized in that** during the transferring in an automated way of the wheel blank (K2), movements are carried out along resp. around four axes (65.6, 74.1, 75.1, 75.2) by a CNC control (34; 64).

## Revendications

1. Dispositif (20; 50) comprenant une station (30 ; 60) d'usinage en commande CNC pour endenter une ébauche de roue (K2), dans lequel la station (30 ; 60) d'usinage présente une seconde broche (31 ; 61) pour un outil comprenant un outil (32 ; 62) d'engrenage et une seconde broche (33 ; 63) pour une pièce à usiner pour la réception de l'ébauche de roue (K2), dans lequel
- la station (30 ; 60) d'usinage est une station d'usinage fonctionnant verticalement, dans lequel pendant l'engrenage la seconde broche (33 ; 63) pour une pièce à usiner avec l'ébauche de roue (K2) est arrangée au-dessous ou au-dessus de la seconde broche (31 ; 61) pour un outil avec l'outil (32 ; 62) d'engrenage,
- le dispositif (2 ; 50) présente en outre au moins une station (40 ; 70) de préusinage fonctionnant verticalement en ce compris un premier manche (41 ; 71) pour un outil et une première broche (42 ; 72) pour une pièce à usiner pour la réception d'une ébauche de pièce à usiner (K1),
**caractérisé en ce que**
- le dispositif (20 ; 50) est concevu pour un usage dans l'usinage doux des roues coniques,
- l'outil d'engrenage (32 ; 62) porte sur une tête coutelière,
- la station (30 ; 60) d'usinage mécaniquement concurremment avec la station (40 ; 70) de préusinage forment une unité fonctionnelle, dans laquelle l'ébauche de pièce à usiner (K1) subit un premier usinage doux dans la station (40 ; 70) de préusinage, tandis que la ébauche de pièce à usiner (K1) est reçue dans la première broche (42 ; 72) pour une pièce à usiner afin d'être transférée ensuite, après le premier usinage doux, comme l'ébauche de roue (K2), à la seconde broche (33 ;63) pour une pièce à usiner de la station (30 ; 60) d'usinage et y être endentée, et
- la station (30 ; 60) d'usinage et la station (40 ; 70) de préusinage sont liées l'une avec l'autre de la conduction.

2. Dispositif (20 ; 50) selon la revendication 1, **caractérisé en ce que** la station (30 ; 60) d'usinage comprend une commande CNC (34 ; 64) et la station (30 ; 60) d'usinage peut être pratiquée ou autarciquement ou concurremment avec la station (40 ; 70) de préusinage comme une unité fonctionnelle.

3. Dispositif (20 ; 50) selon la revendication 2, **caractérisé en ce que** la station (30 ; 60) d'usinage et la station (40 ; 70) de préusinage comprennent des entraînements propres, qui sont tous commandable par la commande CNC (34 ; 64) afin d'être capable à exécuter au moins partiellement simultanément un premier usinage doux d'une ébauche de pièce à usiner (K1) et un engrenage d'une ébauche de roue (K2).

4. Dispositif (20 ; 50) selon la revendication 2 ou 3, **caractérisé en ce que** la station (40 ; 70) de préusinage peut être liée mécaniquement et de la conduction avec la station (30 ; 60) d'usinage moyennant des raccords pour des montages additionnels et **en ce que** le premier usinage doux peut être commandé par la commande CNC (34 ; 64) de la station (30 ; 60) d'usinage.

5. Dispositif (20 ; 50) selon quelques-unes des revendications 1 à 4, **caractérisé en ce que** le dispositif (20 ; 50) comprend un chargeur qui effectue une transmission de façon automatisée de l'ébauche de roue (K2) de la station (40 ; 70) de préusinage à la station (30 ; 60) d'usinage.

6. Dispositif (20 ; 50) selon la revendication 1, 2 ou 3, **caractérisé en ce que** dans la station (40 ; 70) de préusinage fonctionnant verticalement, le manche (41 ; 71) pour un outil est arrangé au-dessous de la broche (42 ; 72) pour une pièce à usiner avec l'ébauche de pièce à usiner (K1).

7. Dispositif (20 ; 50) selon la revendication 1, 2 ou 3, **caractérisé en ce que** le manche (41 ; 71) pour un outil de la station (40 ; 70) de préusinage comprend
- un support (41 ; 73) pour un outil, le support étant équipé avec un outil (43 ; 73.1) de fraisage, ou
- un logement pour un burin de tournage (73.2) et est équipé avec un burin de tournage (73.2),
afin d'usiner l'ébauche de pièce à usiner (K1) reçue dans la broche (42 ; 72) pour une pièce à usiner de la station (40 ; 70) de préusinage.

8. Dispositif (50) selon quelques-unes des revendications 1 à 7, **caractérisé en ce que** le manche pour un outil de la station (70) de préusinage comprend un support (73) pour un outil, le support comprenant un manche pour un outil, le manche comprenant une tête d'une broche tournante, afin d'être capable à entraîner individuellement l'outil (73.1) correspondant.

9. Dispositif (20 ; 50) selon quelques-unes des revendications 1 à 8, **caractérisé en ce qu'**un système (F1, F2) de confinement pour des copeaux est prévu respectivement au-dessous de la station (30 ; 60) d'usinage et au-dessous de la station (40 ; 70) de préusinage, cependant dans chaque système (F1, F2) de confinement les copeaux sont préférablement débardés à l'arrière.

10. Dispositif (20 ; 50) selon quelques-unes des revendications 1 à 9, **caractérisé en ce que** la station d'usinage (30 ; 60) porte sur une fraiseuse pour usiner des roues coniques, laquelle est exposée préférablement spécialement pour le fraisage à sec.

11. Dispositif selon la revendication 10, **caractérisé en ce qu'**il comprend une station pour terminer l'usinage, laquelle est exposée préférablement pour l'ébavurage de l'ébauche de roue (K2) endentée.

12. Dispositif (20 ; 50) selon quelques-unes des revendications 1 à 11, **caractérisé en ce que** le manche (41 ; 71) pour un outil de la station de préusinage comprend un outil d'ébavurage pour l'ébavurage après le tournoiement ou pour l'ébavurage après le fraisage.

13. Dispositif (20 ; 50) selon quelques-unes des revendications 1 à 11, **caractérisé en ce que** tant la station (40 ; 70) de préusinage que la station (30 ; 60) d'usinage comprennent respectivement six axes qui sont commandables par une commande CNC (34 ; 64).

14. Procédé pour un usinage doux des roues coniques, comprenant les étapes suivantes :
(a) encastrer une ébauche de pièce à usiner (K1) à une première broche (42 ; 72) pour une pièce à usiner d'une station (40 ; 70) de préusinage,
(b) exécuter un premier usinage doux de l'ébauche de pièce à usiner (K1) moyennant un outil (43 ; 73.1 - 73.5), qui est encastré dans une première broche (41 ; 73) pour un outil de la station (40 ; 70) de préusinage, afin de fabriquer une ébauche de roue (K2) de l'ébauche de pièce à usiner (K1),
(c) transmettre da façon automatisée l'ébauche de roue (K2) de la station (40 ; 70) de préusinage à une station (30 ; 60) d'usinage, cependant l'ébauche de roue (K2) est transférée de la première broche (42 ; 72) pour une pièce à usiner à une seconde broche (33 ; 63) pour une pièce à usiner de la station (30 ; 60) d'usinage, et
(d) exécuter un second usinage doux de l'ébauche de roue (K2) moyennant un outil (32 ; 62) qui est encastré dans la seconde broche (31 ; 61) pour un outil de la station (30 ; 60) d'usinage, afin d'usiner un engrenage à l'ébauche de roue (K2),
dans lequel la station (30 ;60) d'usinage et la station (40 ; 70) de préusinage sont des stations fonctionnant verticalement, lesquelles sont liées l'une avec l'autre de la conduction, dans lequel la station (30 ; 60) d'usinage mécaniquement concurremment avec la station (40 ; 70) de préusinage forment une unité fonctionnelle, dans lequel l'outil (32 ; 62) de la seconde broche pour un outil porte sur une tête coutelière.

15. Procédé selon la revendication 14, **caractérisé en ce que** la station (30 ; 60) d'usinage et la station (40 ; 70) de préusinage sont liées l'une avec l'autre de la conduction, préférablement à travers un bus (34.1 ; 64.1).

16. Procédé selon la revendication 14 ou 15, **caractérisé en ce que** pendant l'exécution d'un premier usinage doux de l'ébauche de pièce à usiner (K1) est accompli au moins partiellement simultanément avec l'exécution d'un second usinage doux de l'ébauche de roue (K2).

17. Procédé selon la revendication 14, 15 ou 16, **caractérisé en ce que** un chargeur intégré s'emploie lors de la transmission de façon automatisée de l'ébauche de roue (K2) de la station (60) d'usinage et les étapes suivantes sont accomplies :
- prendre en charge l'ébauche de roue (K2) par des moyens (1) de serrage ou de préhension, lesquels sont prévus au premier porteur (73) pour un outil,
- tourner le premier porteur (73) pour un outil en ce compris l'ébauche de roue (K2) autours d'un axe (C2),
- transmettre l'ébauche de roue (K2) des moyens (1) de serrage ou de préhension, lesquels sont prévus au premier porteur, à des moyens de serrage ou de préhension, lesquels sont prévus à la seconde broche (63) pour une pièce à usiner, et
- tourner la seconde broche (63) pour une pièce à usiner en ce compris l'ébauche de roue (K2) autours d'un axe, afin de mettre l'ébauche de roue (K2) dans une position d'usinage avant que l'étape (d) soit accomplie.

18. Procédé selon quelques-unes des revendications 14 à 17, **caractérisé en ce que** le second usinage doux comprend la fraisage, préférablement la fraisage à sec, moyennant la tête coutelière (32 ; 62).

19. Procédé selon la revendication 17, **caractérisé en ce que** lors de la transmission de façon automatisée de l'ébauche de roue (K2), des mouvements le long resp. autours de quatre axes (65.6, 74.1, 75.1, 75.2) sont accomplis par une commande CNC (34 ; 64).
